# EUROPEAN PATENT APPLICATION

(11) **EP 4 503 302 A1**
(43) Date of publication of application: **05.02.2025**
(21) Application number: 24794323.6
(22) Date of filing: 23.01.2024
(51) Int. Cl.: H01M 50/431, H01M 50/446, H01M 50/489, H01M 10/052

(54) **SEPARATOR FOR ELECTROCHEMICAL DEVICE AND ELECTROCHEMICAL DEVICE COMPRISING SAME**

(30) Priority: 09.06.2023 KR 20230074059
(71) Applicant: LG Energy Solution Ltd., 07335 Seoul (KR)
(72) Inventor: KIM, Yeong Ha, Daejeon 34122 (KR); JEONG, So Mi, Daejeon 34122 (KR); YOON, Yeo Ju, Daejeon 34122 (KR); KIM, Seong Jun, Daejeon 34122 (KR); BANG, Ji Hyun, Daejeon 34122 (KR)
(74) Representative: Hoffmann Eitle
(86) International application number: PCT/KR2024/095045
(87) International publication number: WO 2024/253496

(57) **Abstract**

The present invention provides a separator for an electrochemical device includes a porous polymer substrate, and a porous coating layer formed on at least one surface of the porous polymer substrate, wherein the porous coating layer includes a polymer binder, and inorganic particles whose surface is modified with one or more compounds selected from the group consisting of coumarin and a derivative thereof.

## Description

### Technical Field

This application is based on and claims priority from Korean Patent Application No. 10-2023-0074059, filed on June 9, 2023 with the Korean Intellectual Property Office, the disclosure of which is incorporated herein in its entirety by reference.

The present disclosure relates to a separator for an electrochemical device and an electrochemical device including the same.

### Background Art

Electrochemical devices convert chemical energy into electrical energy using electrochemical reactions, and lithium secondary batteries have been widely used in recent years due to their high energy density and voltage, long cycle life, and versatility in a variety of applications.

The lithium secondary batteries may include an electrode assembly manufactured with an anode, a cathode, and a separator disposed between the anode and the cathode, and the electrode assembly is accommodated in a case with an electrolyte. The anode is able to provide lithium ions, and the lithium ions may pass through a separator made of a porous material and move to the cathode. The cathode may be a carbon-based active material that has an electrochemical reaction potential close to that of lithium metal and is capable of inserting and removing lithium ions.

The anode active material may contain lithium and various metal or transition metal elements. For example, nickel may improve the capacity of electrochemical devices, cobalt may improve the capacity and cycle stability of electrochemical devices, manganese may improve the stability of electrochemical devices, and aluminum may improve the output characteristics of the electrochemical devices. In recent years, research has conducted on anodes with a high transition metal content and electrochemical devices containing the anodes to achieve higher energy density.

### DISCLOSURE

### Technical Problem

The present disclosure provides a separator for an electrochemical device capable of scavenging radicals generated in an electrochemical device or adsorbing transition metal ions eluted from an anode, and an electrochemical device including the separator.

### Technical Solution

According to an aspect, the present disclosure provides a separator for an electrochemical device, including a porous polymer substrate, and a porous coating layer formed on at least one surface of the porous polymer substrate, in which the porous coating layer includes a polymer binder, and inorganic particles whose surface is modified with one or more compounds selected from the group consisting of coumarin and a derivative thereof.

The compound may be bound to the inorganic particle through the 4-position of the coumarin.

The compounds may function to remove radicals generated during charging and discharging of the electrochemical device through the 7-position of the coumarin.

The compounds may contain a functional group capable of adsorbing transition metal ions generated during the charging and discharging of the electrochemical device, and the functional group may be at least one selected from the group consisting of a hydroxyl group, an aldehyde group, a carboxyl group, a nitro group, a carbonyl group, an ether group, an ester group, an amine group, a phenol group, a benzoyl group, a pyridine group, and a phosphine group.

The functional group may be located at the 3-position of the coumarin.

The separator may contain about 0.01% by weight to 1.5% by weight of the compound based on the total weight of the inorganic particles.

The inorganic particles and the polymer binder may be included in a weight ratio of about 95:5 to 70:30.

The porous coating layer may be formed on both surfaces of the porous polymer substrate, and the thickness of the separator may be about 6 µm to 20 µm.

According to another aspect of the present disclosure, there is provided an electrochemical device including an anode, a cathode, and a separator disposed between the anode and the cathode, in which the separator is a separator for an electrochemical device of the one aspect described above.

The electrochemical device may be a lithium secondary battery.

The anode may include one or more anode active material selected from the group consisting of Li₁₊ₓMn₂₋ₓO₄ (0≤x≤0.33), LiMnO₃, LiMn₂O₃, LiMnO₂, LiNi₁₋ₓMnₓO₂ (0.01≤x≤0.3), LiMn₂₋ₓMₓO₂ (M=Co, Ni, Fe, Cr, Zn, or Ta, and 0.01≤x≤0.1), Li₂Mn₃MO₈ (M=Fe, Co, Ni, Cu, or Zn), LiNiₓMn₂₋ₓO₄ (0<x<0.5), and LiMn₂O₄.

According to another aspect, the present disclosure provides an electrical device including the electrochemical device.

According to still another aspect, the present disclosure provides a method of manufacturing a separator for an electrochemical device, including forming a porous coating layer including a polymer binder and inorganic particles on at least one surface of a porous polymer substrate, in which the inorganic particles are surface modified with one or more compounds selected from the group consisting of coumarin and a derivative thereof.

The step of forming the porous coating layer may include preparing a coating slurry containing the polymer binder, the inorganic particles, and a dispersion medium, and applying the coating slurry to at least one surface of the porous polymer substrate.

The step of forming the porous coating layer may further include performing a corona discharge treatment on at least one surface of the porous polymer substrate before applying the coating slurry to the at least one surface of the porous polymer substrate.

The step of forming the porous coating layer may include drying the coating slurry applied to the at least one surface of the porous polymer substrate and evaporating the dispersion medium.

The separator for electrochemical devices according to the present disclosure may remove radicals or transition metal ions generated during the charging and discharging process of the electrochemical device, thereby preventing performance degradation of the electrochemical device.

### Mode for Invention

Hereinafter, embodiments of the present disclosure will be described in detail to facilitate the practicing by one of ordinary skill in the art to which the present disclosure belongs. The present disclosure may be implemented in various different forms, and is not limited or restricted by the embodiments described herein below.

As used herein, the term "including" is used to list materials, compositions, devices, and methods useful in the present disclosure and is not limited to the listed examples.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

As used herein, the term "electrochemical device" may refer to a primary battery, a secondary battery, or a supercapacitor.

In electrochemical devices such as lithium secondary batteries that include an anode with a high transition metal content to provide high energy density, radicals may be generated during the charging and discharging process, or transition metal ions may be eluted from the anode active material. The radicals may react with an electrolyte or electrode active material used in the electrochemical device to form unwanted by-products, which may shorten the lifespan of the electrochemical device or reduce the output of the electrochemical device. The transition metal ions eluted from the anode migrate to the cathode and precipitate as impurities containing transition metal elements on the surface of the cathode and form an uneven film, which may cause capacity degradation of the electrochemical device.

Accordingly, there is disclosed a separator for use in electrochemical devices that provides high capacity, which is capable of scavenging radicals generated in the electrochemical device or capturing transition metal ions eluted from the anode to prevent deterioration of the electrochemical device.

According to an embodiment of the present disclosure, a separator for an electrochemical device includes a porous polymer substrate, and a porous coating layer formed on at least one surface of the porous polymer substrate and including a polymer binder, and inorganic particles whose surface is modified with one or more compounds selected from the group consisting of coumarin and a derivative thereof.

The porous polymer substrate may be a porous membrane having a plurality of pores, which electrically insulates the anode and cathode to prevent short circuit. For example, when the electrochemical device is a lithium secondary battery, the porous polymer substrate may be an ion conductive barrier that allows lithium ions to pass through while blocking electrical contact between the anode and the cathode. At least a portion of the pores may form a three-dimensional network communicating with the surface and interior of the porous polymer substrate, and fluid may pass through the porous polymer substrate through the pores.

The porous polymer substrate may be a material that is physically and chemically stable to an electrolyte that is an organic solvent. Examples of the porous polymer substrate include resins, for example, polyolefins such as polyethylene, polypropylene, and polybutylene, polyvinyl chloride, polyethylene terephthalate, polycycloolefins, polyethersulfone, polyamides, polyimides, polyimidamides, nylon, polytetrafluoroethylene, and copolymers or mixtures thereof, but not limited thereto. For example, polyolefin-based resins may be used. The polyolefin-based resins are suitable for manufacturing electrochemical devices with higher energy density because they may be processed to relatively small thicknesses and are easy to apply coating slurries.

The porous polymer substrate may have a monolayer or multilayer structure. The porous polymer substrate may include two or more polymer resin layers having different melting points (Tm) to provide shutdown capability during high temperature runaway of the battery. For example, the porous polymeric substrate may include a polypropylene layer having a relatively high melting point and a polyethylene layer having a relatively low melting point. For example, the porous polymer substrate may be a three-layer structure in which polypropylene, polyethylene, and polypropylene are laminated in this order. As the temperature of the battery rises above a predetermined temperature, the polyethylene layer melts and shuts down the pores, thereby preventing thermal runaway of the battery.

The thickness of the porous polymer substrate may be approximately 1 µm or more and 100 µm or less. For example, the thickness of the porous polymer substrate may be about 10 µm or more and 90 µm or less, 20 µm or more and 80 µm or less, 30 µm or more and 70 µm or less, or 40 µm or more and 60 µm or less. For example, the thickness of the polymer substrate may be about 1 µm or more and 30 µm or less. Also, for example, the thickness of the polymer substrate may be about 5 µm or more and 15 µm or less, or 8 µm or more and 13 µm or less. When the thickness of the porous polymer substrate is adjusted within the above-mentioned range, the amount of the active material included in the electrochemical device may be increased by minimizing the volume of the electrochemical device while electrically insulating the anode and the cathode.

The porous polymer substrate may contain pores having an average diameter of approximately 0.01 µm or more and 1 µm or less. For example, the size of the pores contained in the porous polymer substrate may be about 0.01 µm or more and 0.09 µm or less, 0.02 µm or more and 0.08 µm or less, 0.03 µm or more and 0.07 µm or less, or 0.04 µm or more and 0.06 µm or less. For example, the size of the pores may be about 0.02 µm or more and 0.06 µm or less. When the pore size of the porous polymer substrate is adjusted within the above-mentioned range, the permeability and ionic conductivity of the entire prepared separator may be controlled.

The porous polymer substrate may have a permeability of approximately 10 s/100 cc or more and 100 s/100 cc or less. For example, the porous polymer substrate may have a permeability of about 10 s/100 cc or more and 90 s/100 cc or less, 20 s/100 cc or more and 80 s/100 cc or less, 30 s/100 cc or more and 70 s/100 cc or less, or 40 s/100 cc or more and 60 s/100 cc or less. Also, for example, the permeability of the porous polymer substrate may be about 50 s/100 cc or more and 70 s/100 cc or less. When the permeability of the porous polymer substrate is within the above-mentioned range, the permeability of the prepared separator may be provided in a range suitable for securing the output and cycle characteristics of the electrochemical device.

The permeability (s/100 cc) means a time (in seconds) it takes for 100 cc of air to pass through a predetermined area of a porous polymer substrate or a separator under constant pressure. The permeability may be measured using a Gurley densometer in accordance with ASTM D 726-58, ASTM D726-94, or JIS-P8117. For example, a 4110N instrument from Gurley may be used to measure the time for 100 cc of air to pass through a sample of 1 square inch (or 6.54 cm²) under a pressure of 0.304 kPa of air or 1.215 kN/m² of water. For example, the ASAHI SEIKO EG01-55-1MR instrument may be used to measure the time for 100 cc of air to pass through a sample of 1 square inch under a constant pressure of 4.8 inches of water at room temperature.

The porous polymer substrate may have a porosity of approximately 10 vol% or more and 60 vol% or less. For example, the porosity of the porous polymer substrate may be about 15 vol% or more and 55 vol% or less, 20 vol% or more and 50 vol% or less, 25 vol% or more and 45 vol% or less, or 30 vol% or more and 40 vol% or less. For example, the porosity of the porous polymer substrate may be about 30 vol% or more and 50 vol% or less. When the porosity of the porous polymer substrate is within the above-mentioned range, the ionic conductivity of the prepared separator may be provided in a range suitable for securing the output and cycle characteristics of the electrochemical device.

The porosity refers to a ratio of a volume of pores to the total volume of the porous polymer substrate. The porosity may be measured by a method known in the art. For example, the porosity may be measured by Brunauer Emmett Teller (BET) measurement using adsorption of nitrogen gas, capillary flow porometer, or water or mercury infiltration method.

The porous coating layer is formed on at least one surface of the porous polymer substrate, and may include a polymer binder, and inorganic particles whose surface is modified with one or more compounds selected from the group consisting of coumarin and/or a derivative thereof. The porous coating layer may be formed by coating one surface of the porous polymer substrate with a coating slurry containing the inorganic particles, the polymer binder, and a dispersion medium. The inorganic particles may have a surface modified by a compound to be described later. For example, the separator may be prepared by applying the coating slurry to at least one side of the porous polymer substrate, followed by drying to remove the dispersion medium. Since the inorganic particles included in the porous coating layer are connected by the polymer binder to form an interstitial volume, the porous coating layer is adhered to the porous polymer substrate while allowing lithium ions to pass through the interstitial volume, thereby preventing heat shrinkage of the porous polymer substrate. For example, the separator for the electrochemical device may have the porous coating layer formed on both sides of the porous polymer substrate.

The coating slurry may contain a dispersion medium to dissolve or disperse at least a portion of the polymer binders, and disperse the inorganic particles. The coating slurry may be used in which the polymer binder and inorganic particles are uniformly dispersed by controlling the type and content of the dispersion medium. Examples of the dispersion medium include water, ethanol, acetone, isopropyl alcohol (IPA), dimethylacetamide (DMAc), dimethylformamide (DMF), N-methyl-2-pyrrolidone (NMP), acetonitrile (acetonitrile), and combinations thereof. For example, the dispersion medium may be water. The above-described type of dispersion medium may be used to form a porous coating layer in which inorganic particles are uniformly dispersed.

The coating slurry may have a viscosity of approximately 100 cps or more and 1,000 cps or less. For example, the viscosity of the coating slurry may be about 200 cps or more and 900 cps or less, 300 cps or more and 800 cps or less, 400 cps or more and 700 cps or less, or 500 cps or more and 600 cps or less. For example, the viscosity of the coating slurry may be 300 cps or more and 800 cps or less. When the viscosity of the coating slurry exceeds 1,000 cps, a slurry with a very large particle size (D99) is formed (D99 ~100 µm), which makes it difficult to manufacture a separator through continuous application on a porous polymer substrate, so that it is difficult to secure productivity.

The coating slurry may further include additives such as dispersants, surfactants, anti-foaming agents, flame retardants, and wetting agents to improve dispersibility and flame retardancy and improve the uniformity of the formed porous coating layer. Examples of the dispersant include one or more selected from the group consisting of oil-soluble polyamines, oil-soluble amine compounds, fatty acids, fatty alcohols, sorbitan fatty acid esters, tannic acid, pyrogallic acid, and polyacrylic acid. By using the above-described type of dispersant, it is possible to improve the stability of the coating slurry, and secure the uniformity of the porous coating layer formed from the coating slurry.

The additive may be contained in an amount of approximately 0% by weight or more and 5% by weight or less based on the total weight of the coating slurry. For example, the content of the additive may be about 0.01% by weight or more and 4% by weight or less, 0.1% by weight or more and 3% by weight or less, or 1% by weight or more and 2% by weight or less. For example, the content of the additive may be about 3% by weight or more and 5% by weight or less. When the content of the additive is adjusted within the above-mentioned range, uniform dispersion and stability of the inorganic particles contained in the coating slurry may be achieved.

The dispersion medium contained in the coating slurry may be removed by drying or heating after the formation of the porous coating layer. For example, the porous coating layer may contain 5 ppm or less of the dispersion medium. For example, the porous coating layer may be composed of an acrylic-based polymeric binder, a copolymer binder, and inorganic particles. In the process of removing the dispersion medium, a plurality of pores may be formed on the surface and inside the porous coating layer. The pores may include interstitial volumes formed between the inorganic particles, and may have a structure in which a three-dimensional network is formed to allow fluid to pass therethrough.

The thickness of the porous coating layer may be approximately 1 µm or more and 15 µm or less. For example, the thickness of the porous coating layer may be about 2 µm or more and 14 µm or less, 3 µm or more and 13 µm or less, 4 µm or more and 12 µm or less, 5 µm or more and 11 µm or less, 6 µm or more and 10 µm or less, or 7 µm or more and 9 µm or less. For example, the thickness of the porous coating layer may be about 1 µm or more and 5 µm or less. When the thickness of the porous coating layer is adjusted within the above-mentioned range, it is possible to minimize shrinkage of the porous polymer substrate and achieve stable adhesion to the porous polymer substrate.

The inorganic particles may have surfaces modified with one or more compounds selected from the group consisting of coumarin and a derivative thereof. The coumarin may be represented by Formula 1 below. Formula 1 shows position numbers indicated in the coumarin ring according to IUPAC numeration. Hereinafter, "the n-position" refers to the position number indicated in Formula 1 below.

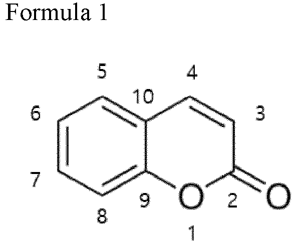

Coumarin is a benzopyrone-based compound that is found in nature as a type of phytoalexin, which is a plant metabolite, and is known to have antioxidant effects. Further, the coumarin or its derivative may act as a scavenger for radicals.

The present disclosure applies a compound selected from the group consisting of the coumarin and a derivative thereof to a separator of an electrochemical device, and confirming that modifying the surface of inorganic particles included in a porous coating layer of the separator with the compound may remove radicals generated during charging and discharging of the electrochemical device while preventing unwanted performance degradation of the separator. Typically, when the compound is included in a porous polymer substrate or electrolyte rather than in inorganic particles, it may not provide a barrier effect against by-products generated by the charging and discharging of the electrochemical device, so that the separator surface may be directly damaged by dendrites forming on the cathode surface. Damage to the separator as described above may be evaluated by the permeability of the separator and may cause a decrease in the retention rate of cell performance.

The compound may be a group consisting of the coumarin and/or a coumarin derivative with a partial structure change including one or more of the 1- to 10-positions of the coumarin. The change in structure may include substitution of constituent elements or bonding of functional groups. Specifically, the compound is capable of modifying the surface of inorganic particles, which will be described later, and may remove radicals generated during the charging and discharging process of the electrochemical device through the 7-position. The compounds may be chemically synthesized or commercially available, but are not limited thereto.

Modifying the surface of an inorganic particle with the compound may encompass forming a chemical bond between the compound and the inorganic particle. For example, the inorganic particle whose surface is modified with the compound may be one in which the compound and the inorganic particle form a chemical bond.

For example, the compound may form a chemical bond with the inorganic particle. In the compound, the position that forms a chemical bond with the inorganic particle may be at least one position other than the 7-position. For example, the compound may be bound to the inorganic particle through the 4-position of the coumarin. Also, for example, the compound may be a coumarin derivative having a halogen at the 4-position of coumarin, and the inorganic particle may be silica. After introducing an amino group to the surface of the silica using, for example, 3-aminopropylethoxysilane (APTES), the compound may be anchored at the position of the amino group in the presence of a toluene solvent in a basic environment.

At this time, the degree of surface modification of the inorganic particles may be adjusted by adjusting the relative content of the inorganic particles and the compound added to the solvent. For example, the compound may be added in an amount of about 0.05% by weight to 0.15% by weight based on the total mass of the toluene solvent. When a separator is prepared with a coating slurry containing inorganic particles modified by adding the above-described compound in an amount within the above-mentioned range, the separator contains the compound at a ratio of about 0.01% by weight to 1.5% by weight based on the total weight of the inorganic particles. For example, the separator may include the compound in a ratio of about 0.1% by weight to 1.0% by weight, 0.1% by weight to 0.5% by weight, or 0.1% by weight to 0.3% by weight based on the total weight of the inorganic particles. When the weight ratio of the inorganic particles and the compound that modifies the inorganic particles satisfies the above-mentioned range, radicals or transition metal ions generated during charging and discharging of the electrochemical device may be removed without deteriorating the performance of the electrochemical device. When the content of the compound is less than approximately 0.01% by weight based on the total weight of the inorganic particles, a significant effect on preventing cell performance degradation cannot be determined. Even when the compound is mixed such that the content exceeds approximately 1.5% by weight, modification capable of significantly increasing the transition metal adsorption capacity of the inorganic particles is not achieved.

The compound may remove radicals generated during the charging and discharging process of the electrochemical device through the 7-position of the coumarin. The radicals may be a free radicals generated by a side reaction between the electrode and the electrolyte during the charging and discharging process of the electrochemical device, generated during the decomposition of the electrolyte at high temperatures, or generated by impurities inside the electrochemical device, but not limited thereto. The radicals may be superoxide, hydroxyl radicals, alkoxyl radicals, or carbonate radicals, and may be hydroxyl radicals. The compound may scavenge radicals generated in the electrochemical device by providing electrons to the radicals to form more stable radicals than the radicals. The compound is capable of scavenging one or more radicals. For example, the radical generated inside the electrochemical device may be a hydroxyl radical, and the compound may be coumarin. The coumarin may scavenge the radical to form 7-hydroxycoumarin.

The compound may further contain a functional group capable of adsorbing transition metal ions generated during the charging and discharging process of the electrochemical device. The transition metal ions may be those eluted from the anode active material into the electrolyte during the charging and discharging process of the electrochemical device. For example, the transition metal ions may be nickel ions, manganese ions, cobalt ions, copper ions, or aluminum ions, and for example, may be nickel ions, manganese ions, or copper ions. The compound may remove transition metal ions contained in the electrolyte through the functional group, thereby preventing the transition metal ions from migrating to the electrode and precipitating as impurities.

The functional group may be one or more selected from the group consisting of a hydroxy group, an aldehyde group, a carboxyl group, a nitro group, a carbonyl group, an ether group, an ester group, an amine group, a phenol group, a benzoyl group, a pyridine group, and a phosphine group. The compound having the functional group may adsorb the transition metal ions contained in the electrolyte by coordinating with or forming a hydrogen bond. One or more compounds having the functional group may adsorb one or more transition metal ions.

The position of the functional group may be at least one position other than the 4- and 7-positions of the coumarin. For example, the functional group may be located at the 3-position of the coumarin. For example, the compound may be a coumarin derivative having a benzoyl group at the 3-position of the coumarin, and the benzoyl group may coordinate a transition metal ion with the ketone at the 2-position of the coumarin. The transition metal ions may be adsorbed and removed from the electrolyte solution in such a manner that two or more of the compounds coordinate with one transition metal ion.

The compound may remove radicals or transition metal ions generated during the charging and discharging process of an electrochemical device to prevent a deterioration in the cell performance retention rate of the electrochemical device, and reduce the amount of gas generated by side reactions caused by by-products formed by the radicals or transition metal ions.

The inorganic particles may be electrochemically stable. The inorganic particles are not particularly limited as long as oxidation and/or reduction reactions do not occur in the operating voltage range of the electrochemical device (e.g., 0 to 5 V based on Li/Li⁺). In particular, the use of inorganic particles having a high permittivity may contribute to an increase in the dissociation of electrolyte salts, such as lithium salts, in the liquid electrolyte, thereby improving the ionic conductivity of the electrolyte. For the reasons described above, the inorganic particles may include high-permittivity inorganic particles having a dielectric constant of 5 or more, and may be 10 or more. Non-limiting examples of inorganic particles having a dielectric constant of 5 or more include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, and mixtures thereof.

Further, inorganic particles having a lithium ion transfer capacity, that is, inorganic particles that contain the element lithium but do not store lithium and have an ability to transfer lithium ions, may be used as the inorganic particles. Non-limiting examples of the inorganic particles having a lithium ion transfer capability include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glasses (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂ series glasses (LiₓSi_{y}S_{z}, 0<x<3, 0<y<2, 0<z<4) such as Li₃PO₄-Li₂S-SiS₂, and P₂S₅ series glasses (LiₓP_{y}S_{z}, 0<x<3, 0<y<3, 0<z<7) such as LiI-Li₂S-P₂S₅, or a mixture of two or more thereof.

Further, inorganic particles having flame retardancy may be used to impart flame retardant properties to the separator, or to prevent the temperature inside the electrochemical element from rising rapidly. Non-limiting examples of the inorganic particles having flame retardancy include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, and mixtures thereof.

The average particle diameter (D50) of the inorganic particles may be approximately 50 nm or more and 5,000 nm or less. For example, the average particle diameter (D50) of the inorganic particles may be about 100 nm or more and 4,500 nm or less, 200 nm or more and 4,000 nm or less, 300 nm or more and 3,000 nm or less, 400 nm or more and 2,000 nm or less, or 500 nm or more and 1,000 nm or less. When the average particle diameter of the inorganic particles is less than approximately 50 nm, an additional polymer binder for bonding between the inorganic particles is required as the specific surface area increases, which is disadvantageous in terms of electrical resistance. When the average particle diameter of the inorganic particles exceeds approximately 5,000 nm, the uniformity of the surface of the coating layer may decrease and damage to the porous polymer substrate or electrode may occur during lamination.

The polymer binder may bind the inorganic particles included in the porous coating layer and provide adhesion to the porous coating layer. The polymer binder may be an acrylic polymer binder, a fluorine-based polymer binder, or a mixture thereof.

For example, the acrylic polymer binder may have a repeating unit including one or more monomers selected from the group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile, butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl(meth)acrylate, isooctyl(meth)acrylate, isononyl(meth)acrylate, lauryl(meth)acrylate, tetradecyl(meth)acrylate, and pentafluorophenylacrylate.

For example, the fluorine-based binder may contain one or more selected from the group consisting of polyvinylidene fluoride, polyhexafluoropropylene, polytetrafluoroethylene, polyvinylidene fluoride-hexafluoropropylene, polyvinylidene fluoride-trichloroethylene, and polyvinylidene fluoride-chlorotrifluoroethylene.

The weight average molecular weight (Mw) of the polymer binder may be approximately 30,000 or more and 100,000 or less. For example, the weight average molecular weight of the polymer binder may be about 40,000 or more and 90,000 or less, 50,000 or more and 80,000 or less, or 60,000 or more and 70,000 or less. For example, the weight average molecular weight of the polymer binder may be about 50,000 or more and 80,000 or less. When the weight average molecular weight of the polymer binder is adjusted within the above-mentioned range, the inorganic particles may be bound to form and maintain a porous structure of the porous coating layer within a range such that the viscosity of the coating slurry does not exceed approximately 1,000 cps.

The weight average molecular weight of the polymer binder may be measured by gel permeation chromatography (GPC) (PL GPC220, Agilent Technologies). For example, the weight average molecular weight may be determined by using trichlorobenzene (TCB) as a solvent in a PL Olexis (Polymer Laboratories) column (column temperature: 160 °C), and using an Agilent High Temperature RI detector under the conditions of sample concentration of 1.0 mg/mL, flow rate of 1.0 mL/min, and injection volume of 200 µl (corrected using a cubic function, reference: Polystyrene).

The inorganic particles and the polymer binder may be included in a weight ratio of approximately 95:5 to 70:30. For example, the weight ratio of the inorganic particles and the polymer binder may be about 90:10, 85:15, 80:20, or 75:25. A separator containing the inorganic particles and the polymer binder within the above-mentioned range may maintain adhesion even in a state of being impregnated with an electrolyte solution, so that the heat shrinkage rate may be reduced even at high temperatures at which the electrochemical device operates.

The separator for the electrochemical device may have a permeability of approximately 100 s/100 cc or more and 150 s/100 cc or less. For example, the permeability of the separator may be about 110 s/100 cc or more and 140 s/100 cc or less, or 120 s/100 cc or more and 130 s/100 cc or less. For example, the permeability of the separator may be about 100 s/100 cc or more and 120 s/100 cc or less. When the permeability of the separator is within the above-mentioned range, the output, stability, and cycle characteristics of the electrochemical device may be secured.

The thickness of the separator for the electrochemical device may be approximately 6 µm or more and 20 µm or less. For example, the thickness of the porous coating layer may be about 7 µm or more and 19 µm or less, 8 µm or more and 18 µm or less, 9 µm or more and 17 µm or less, 10 µm or more and 16 µm or less, 11 µm or more and 15 µm or less, or 12 µm or more and 14 µm or less. For example, the thickness of the separator may be about 10 µm or more and 16 µm or less. When the thickness of the separator is adjusted within the above-mentioned range, it is possible to achieve electrical insulation between the electrodes while maximizing the amount of active material loading on the electrodes, resulting in an electrochemical device with a higher capacity.

According to another embodiment of the present disclosure, an electrochemical device includes an anode, a cathode, and a separator interposed between the anode and the cathode, in which the separator is the separator of the above-described embodiment. The electrochemical device may be manufactured by inserting an electrode assembly including an anode, a cathode, and a separator interposed between the anode and the cathode into a case or pouch, and sealing the case or pouch. Before sealing the case or pouch, the electrode assembly may be impregnated with the electrolyte solution by injecting the electrolyte solution. The shape of the case or pouch is not limited. For example, the electrochemical device may be a cylindrical, prismatic, coin-shaped, or pouch-shaped lithium secondary battery.

The anode and the cathode may be coated by applying and drying an electrode active material on at least one surface of each collector. The collector may be a material that has conductivity without causing chemical changes in the electrochemical device. Examples of the collector for the anode include aluminum, nickel, titanium, fired carbon, and stainless steel; and aluminum or stainless steel which is subjected to surface treatment with carbon, nickel, titanium, or silver, but not limited thereto. Examples of the collector for the cathode include copper, nickel, titanium, fired carbon, and stainless steel; and copper or stainless steel which is subjected to surface treatment with carbon, nickel, titanium, or silver, but not limited thereto. The collector may be in various forms, such as a thin metal plate, film, foil, net, porous material, or foam.

The anode includes an anode collector and an anode active material layer containing an anode active material, a conductive material, and a binder resin on at least one surface of the collector. The anode active material may include at least one selected from the group consisting of Li₁₊ₓMn₂₋ₓO₄ (0≤x≤0.33), LiMnO₃, LiMn₂O₃, LiMnO₂, LiNi₁₋ₓMnₓO₂ (0.01≤x≤0.3), LiMn₂₋ₓMₓO₂ (M=Co, Ni, Fe, Cr, Zn, or Ta, and 0.01≤x≤0.1), Li₂Mn₃MO₈ (M=Fe, Co, Ni, Cu, or Zn), LiNiₓMn₂₋ₓO₄ (0<x<0.5), and LiMn₂O₄.

The cathode includes a cathode collector and a cathode active material layer containing a cathode active material, a conductive material, and a binder resin on at least one surface of the collector. The cathode active material in the cathode includes carbon such as lithium metal oxide, hard carbon, and graphitic carbon; silicon-based materials such as LiₓFe₂O₃ (0≤x≤1), LiₓWO₂ (0≤x≤1), Si, SiOₓ (0<x<2), SiC, and Si alloy; metal complex oxides such as SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y ≤3; 1≤z≤8); lithium metal; lithium alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxide, which may be used alone or in mixture of two or more thereof.

The conductive material may be any one or a mixture of two or more conductive materials selected from the group consisting of graphite, carbon black, carbon fiber or metal fiber, metal powder, conductive whisker, conductive metal oxide, carbon nanotube, activated carbon, and polyphenylene derivative. The carbon nanotube has a graphite sheet in a shape of a cylinder having a nano-sized diameter and an sp² bond structure, and exhibits conductor or semiconductor characteristics according to the angle and structure at which the graphite sheet is rolled. The carbon nanotube may be categorized as a single-walled carbon nanotube (SWCNT), a double-walled carbon nanotube (DWCNT), and a multi-walled carbon nanotube (MWCNT) based on the number of bonds that make up their walls, and the carbon nanotube may be appropriately selected based on the application of the dispersion. More specifically, the conductive material may be one selected from the group consisting of natural graphite, artificial graphite, super-p, acetylene black, Ketjen black, channel black, furnace black, lamp black, summer black, denka black, aluminum powder, nickel powder, zinc oxide, potassium titanate, and titanium oxide, or a mixture of two or more thereof.

The binder resin that may be used herein may be any binder resin commonly used for electrodes of electrochemical devices. Non-limiting examples of the binder resin include polyvinylidene fluoride-co-hexafluoropropylene, polyvinylidene fluoride-co-trichloroethylene, poly(methyl methacrylate), poly(ethylhexyl acrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose.

The electrolyte may be obtained by dissolving or dissociating a salt with a structure such as A⁺B⁻, in which A⁺ includes an alkali metal cation such as Li⁺, Na⁺, or K⁺, or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination thereof, in an organic solvent such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), γ-butyrolactone, or a mixture thereof.

The electrochemical device including the electrode assembly may be a lithium secondary battery. The battery may be used as a unit cell, and may be used as a battery module including the unit cell, and a battery pack including the battery module. The battery pack may be used as a power source for various electrical devices. Examples of the electric devices include small devices such as computers, mobile phones, and power tools; electric cars, including electric vehicles (EVs), hybrid electric vehicles (HEVs), and plug-in hybrid electric vehicles (PHEVs) powered by electric motors; electric two-wheeled vehicles, including electric bicycles (E-bikes) and electric scooters (E-scooters); electric golf carts; and medium to large devices such as power storage systems, but not limited thereto.

Another embodiment of the present disclosure provides a method for preparing a separator for an electrochemical device, including forming a porous coating layer containing a polymer binder and inorganic particles on at least one surface of a porous polymer substrate. Contents that overlap with the contents described in the separator for the electrochemical device is replaced with the explanation of the preceding embodiment.

The step of forming the porous coating layer may include preparing a coating slurry containing the polymer binder, the inorganic particles, and a dispersion medium, and applying the coating slurry to at least one surface of the porous polymer substrate, followed by drying. The inorganic particles may have surfaces modified with one or more compounds selected from the group consisting of coumarin and a derivative thereof.

The step of forming the porous coating layer may further include performing a corona discharge treatment on at least one surface of the porous polymer substrate before applying the coating slurry to at least one surface of the porous polymer substrate. The step of performing the corona discharge treatment on at least one surface of the porous polymer substrate may prevent a decrease in the binding force between the surface of the porous polymer substrate and the surface of the coating layer at a high temperature, and prevent the binding force between the surface of the polymer substrate and the surface of the coating layer from being lowered by the electrolyte.

The step of forming the porous coating layer may include coating the coating slurry on at least one surface of the porous polymer substrate. For example, the coating may be formed by, but not limited to, a bar coater, a wire bar coater, a roll coater, a spray coater, a spin coater, an inkjet coater, a screen coater, a reverse coater, a gravure coater, a knife coater, a slot die coater, a hot melt coater, a comma coater, and a direct metering coater. For example, the step of forming the porous coating layer may include simultaneously coating both surfaces of the porous polymeric substrate with the coating slurry using a bar coater or a slot die coater.

The step of forming the porous coating layer may include applying the coating slurry to the porous polymer substrate, followed by drying or heating the coating layer to evaporate the dispersion medium contained in the coating layer. The removal of the dispersion medium may be performed at a temperature capable of evaporating only the dispersion medium contained in the coating layer without modifying the polymer binder contained in the coating layer. For example, the removal of the dispersion medium may be implemented by heating the coating layer to a predetermined temperature, but ensuring that the temperature of the surface of the coating layer does not exceed 60 °C. When heating the coating layer under the above conditions, the thermal energy may be used first to heat the dispersion medium and change the phase, and may not be used to modify the polymer binder.

Hereinafter, the present disclosure will be described in more detail with reference to examples and experimental examples. The following examples and experimental examples are only illustrative of the present disclosure, and the present disclosure is not limited to the following examples and experimental examples.

### Example 1

### Surface Modification of Inorganic Particles

At room temperature (25 °C), Al₂O₃ (particle diameter (D50): 500 nm) as inorganic particles was added to a mixture of APTES:CTAB:EtOH:H₂SO₄ at a molar ratio of 1:0.1:9:0.004, and after reacting at 60 °C for 90 minutes, the inorganic particles were separated and dried in air for 24 hours.

10 g of coumarin having an amine group introduced at the 3-position was added to 1,200 mL of toluene (pH 8.6) to prepare a coumarin solution having a coumarin content of 0.05 w/w% relative to the toluene solvent, and 30 g of the inorganic particles (coumarin content of 0.01% by weight based on the total weight of the inorganic particles) was added and stirred at room temperature for 12 hours to obtain inorganic particles whose surface was modified with the coumarin.

### Preparation of Coating Slurry

In 100 mL of distilled water at room temperature, an acrylic polymer binder (Toyo ink, CSB130, solid content 40%, average particle size (D50) about 177 nm), carboxylmethyl cellulose (GLChem, SG-L02), and a wetting agent were added at a weight ratio of 8:5:1, and 20 g of surface-modified inorganic particles were added (weight ratio of inorganic particles: polymer binder 90: 10). The mixture was stirred with a shaker for 60 minutes to prepare a coating slurry.

### Preparation of Porous Polymer Substrate

As a porous polymer substrate, a polyethylene film (MI: 0.2 g/10 min, Tm: 135 °C, porosity: 45%, average pore size: 45 nm) with a size of 20 cm × 30 cm and a thickness of 9 µm was used.

### Preparation of Separator

The coating slurry was coated on both surfaces of the polyethylene film using a bar coater to form a coating layer having a thickness of 3 µm.

The process of applying a low-temperature airflow to the polyethylene film on which the coating layer was formed and removing the dispersion medium was repeated five times to prepare a separator with a total thickness of 15 µm.

### Example 2

A separator was prepared in the same manner as in Example 1, except that upon surface modification of the inorganic particles, a coumarin solution with a coumarin content of 0.15 w/w% relative to the toluene solvent was prepared, and 1.5 g of inorganic particles (coumarin content of 0.1% by weight based on the total weight of the inorganic particles) was added thereto.

### Comparative Example 1

A separator was prepared in the same manner as Example 1, except that inorganic particles with surface unmodified were used.

### Comparative Example 2

A polyethylene film was dip-coated in a solution in which the coumarin used in Example 1 was dissolved in a toluene solvent at a concentration of 1% by weight, the film was immersed in distilled water to undergo a phase transition, and then dried in a vacuum oven for 12 hours to prepare a separator having a total thickness of 12 µm without a porous coating layer.

### Comparative Example 3

A separator was prepared in the same manner as in Example 1, except that upon surface modification of the inorganic particles, a coumarin solution with a coumarin content of 0.3 w/w%) relative to the toluene solvent was prepared, and about 1 g of inorganic particles (coumarin content of 30% by weight based on the total weight of the inorganic particles) was added thereto.

### Experimental Example 1. Determination of Transition Metal Adsorption Capacity of Inorganic Particles

The transition metal adsorption capacity of the inorganic particles or surface-modified inorganic particles prepared in Examples and Comparative Examples was determined and is shown in Table 1 below.

An adsorption evaluation solution was prepared by dissolving nickel or manganese as a transition metal in dimethyl carbonate (DMC) at room temperature in a saturated amount (2,000 ppm). 1 g of the inorganic particles was added to 15 g of the adsorption evaluation solution, stirred with a shaker for 12 hours, and the inorganic particles were recovered using a centrifuge. Then, the adsorption evaluation solution was subjected to inductively coupled plasma mass spectrometry (ICP-MS) using ICP-OES (Thermo Fisher) to determine the concentration of transition metal ions remaining in the solution to derive the amount of transition metal ions adsorbed by the inorganic particles.

**Table 1**

| Example | Modification of inorganic particles | Degree of modification of inorganic particles (Percent by weight of coumarin-based compound relative to the weight of inorganic particles) | Transition metal ion adsorption amount (ppm) | |
|---|---|---|---|---|
| | | | Ni | Mn |
| Comparative Example 1 | × | 0 | 50 | 5 |
| Example 1 | ○ | 0.01 | 900 | 1,500 |
| Example 2 | ○ | 0.1 | 2,000 | 2,000 |
| Comparative Example 3 | ○ | 30 | 2,000 | 2,000 |

The inorganic particles of Comparative Example 1 did not exhibit significant adsorption capacity for transition metal ions due to lack of surface modification. In Examples 1 and 2, it was confirmed that the adsorption capacity of transition metal ions increases as the degree of surface modification of the inorganic particles increases, but when the content of coumarin-based compound is 0.1% by weight based on the total weight of the inorganic particles, the adsorption treatment of transition metal ions in a saturated electrolyte is possible.

### Experimental Example 2. Determination of Properties of Separator

The properties of the separators prepared in Examples and Comparative Examples were confirmed and shown in Table 2 below.

### Measurement of Permeability

The permeability was measured using a Gurley densometer (Gurley, 4110N) to determine the time it takes for 100 cc of air to pass through a separator with a diameter of 28.6 mm and an area of 645 mm².

### Measurement of Cell Performance Retention Rate

The amounts of lithium manganese composite oxide (LiMnO₂): a conductive material (Denka black): a binder (PVdF) were weighed to be in the weight ratio of 95:2.5:2.5, added to N-methylpyrrolidone (NMP), and mixed to prepare an anode active material slurry, which was then coated to a thickness of 200 µm on a 20 µm thick aluminum foil, followed by rolling and drying to prepare an anode.

A Li metal plate with a thickness of 200 µm was used as a cathode, and the anode and the cathode were stacked with the separator of Examples or Comparative Examples in between, and then inserted into an aluminum pouch.

Into the aluminum pouch, was injected 1 g of an electrolyte containing 3 mol of vinylene carbonate (VC), 1.5 mol of propanesulfon (PS), 1 mol of ethylene sulfate (ESa), and 1 mol of lithium salt LiPF₆ as additives in a solvent mixed with ethylene carbonate (EC) and ethyl methyl carbonate (EMC) in a weight ratio of 3/7, and the pouch was sealed to prepare a cell.

The prepared cell was subjected to a single charge and discharge at 0.1 C in the voltage range of 3.0 V to 4.4 V in a 25 °C chamber, followed by 400 cycles of 0.33C charge and 0.33 C discharge to determine the performance retention rate. The performance retention rate was calculated as a ratio of the discharge capacity after repeating 400 cycles to the initial discharge capacity.

Further, the resistance was measured before and after the 400 cycles to determine the resistance increase rate.

### Measurement of Amount of Gas Generated

After piercing the cell that has undergone the cycle repetition 400 times to collect the gas inside the cell, the amounts of carbon monoxide, carbon dioxide, methane, and ethane contained in the gas were quantified using a flame ionization detector (FID) and a thermal conduction detector (TCD).

**Table 2**

| Example | Thicknes s of separator (µm) | Permeability of separator (s/100 cc) | Cell performance retention rate after 400 cycles (%) | Resistance increase rate after 400 cycles (%) | Amount of gas generated (µl) | | | |
|---|---|---|---|---|---|---|---|---|
| | | | | | CO | CO₂ | CH₄ | C₂H₄ |
| Comparative Example 1 | 15 | 112 | 76 | 29 | 118 | 137 | 44 | < 5 |
| Comparative Example 2 | 12 | 86 | 56 | 15 | 154 | 183 | 49 | < 5 |
| Example 1 | 15 | 118 | 89 | 11 | 73 | 48 | 21 | < 5 |
| Example 2 | 15 | 119 | 88 | 10 | 71 | 50 | 20 | < 5 |
| Comparative Example 3 | 15 | 126 | 86 | 11 | 70 | 53 | 22 | < 5 |

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A separator for an electrochemical device, comprising:
a porous polymer substrate; and
a porous coating layer formed on at least one surface of the porous polymer substrate,
wherein the porous coating layer includes a polymer binder, and inorganic particles whose surface is modified with one or more compounds selected from the group consisting of coumarin and a derivative thereof.

2. The separator according to claim 1, wherein the compound is bound to the inorganic particle through the 4-position of the coumarin.

3. The separator according to claim 1, wherein the compound removes radicals generated during charging and discharging of the electrochemical device through the 7-position of the coumarin.

4. The separator according to claim 1, wherein the compound contains a functional group capable of adsorbing transition metal ions generated during the charging and discharging of the electrochemical device, and
the functional group is at least one selected from the group consisting of a hydroxyl group, an aldehyde group, a carboxyl group, a nitro group, a carbonyl group, an ether group, an ester group, an amine group, a phenol group, a benzoyl group, a pyridine group, and a phosphine group.

5. The separator according to claim 4, wherein the functional group is located at the 3-position of the coumarin.

6. The separator according to claim 1, wherein the separator contains 0.01% by weight to 1.5% by weight of the compound based on the total weight of the inorganic particles.

7. The separator according to claim 1, wherein the inorganic particles and the polymer binder are included in a weight ratio of 95:5 to 70:30.

8. The separator according to claim 1, wherein the porous coating layer is formed on both surfaces of the porous polymer substrate, and
the thickness of the separator is 6 µm to 20 µm.

9. An electrochemical device comprising:
anode;
cathode; and
a separator disposed between the anode and the cathode,
wherein the separator is the separator for an electrochemical device of claim 1.

10. The electrochemical device according to claim 9, wherein the anode includes one or more anode active material selected from the group consisting of Li₁₊ₓMn₂₋ₓO₄, wherein 0≤x≤0.33; LiMnO₃; LiMn₂O₃; LiMnO₂; LiNi₁₋ₓMnₓO₂, wherein 0.01≤x≤0.3; LiMn₂₋ₓMₓO₂, wherein M=Co, Ni, Fe, Cr, Zn, or Ta, and 0.01<x<0.1; Li₂Mn₃MO₈, wherein M=Fe, Co, Ni, Cu, or Zn; LiNiₓMn₂₋ₓO₄, wherein 0<x<0.5; and LiMn₂O₄.
